(19) Europäisches Patentamt / European Patent Office / Office européen des brevets

(11) **EP 2 695 861 A1**

(12) **EUROPEAN PATENT APPLICATION**
published in accordance with Art. 153(4) EPC

(43) Date of publication:
**12.02.2014 Bulletin 2014/07**

(51) Int Cl.:
***C02F 3/20*** (2006.01)

(21) Application number: **11863027.6**

(86) International application number:
**PCT/JP2011/058414**

(22) Date of filing: **01.04.2011**

(87) International publication number:
**WO 2012/137276 (11.10.2012 Gazette 2012/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Mitsubishi Rayon Co., Ltd.**
**Tokyo 100-8253 (JP)**

(72) Inventors:
• **KAWAGISHI Tomoki**
**Toyohashi-shi**
**Aichi 440-8601 (JP)**

• **YANONE Katsuyuki**
**Toyohashi-shi**
**Aichi 440-8601 (JP)**
• **NAKAHARA Yoshihito**
**Toyohashi-shi**
**Aichi 440-8601 (JP)**

(74) Representative: **HOFFMANN EITLE**
**Patent- und Rechtsanwälte**
**Arabellastrasse 4**
**81925 München (DE)**

(54) **OPERATING METHOD FOR AIR DIFFUSION APPARATUS**

(57)     The present invention relates to n operating method for an air diffusion apparatus wherein the air diffusion apparatus is provided with an air diffusion unit being disposed within an activated sludge aeration tank and spurts a gas for diffusion, and a gas supply unit for supplying the gas for diffusion to the air diffusion unit wherein: the air diffusion unit is configured to equip one or more air diffusion pipes disposed substantially horizontally; a plurality of air diffusion holes are formed on a vertical upper portion of the air diffusion pipe, and one or more sludge passage holes are formed on a lower portion of the air diffusion pipe; the gas for diffusion is supplied from the gas supply unit to the air diffusion unit so that a pressure head $\Delta H$ of each air diffusion pipe calculated by below formula (I) has a value 0.2 to 0.9 times an inner diameter $d_1$ of the air diffusion pipe; and a supplying step where the gas for diffusion is supplied from the gas supply unit to the air diffusion unit, and a stopping step where the supplying of the gas for diffusion is stopped without releasing the inside of the air diffusion pipe to the atmosphere are repeatedly operated.

FIG. 1

EP 2 695 861 A1

**Description**

TECHNICAL FIELD

The present invention relates to an operating method of an air diffusion apparatus used for air diffusion in an activated sludge aeration tank.

BACKGROUND ART

Conventionally, treatment of an activated sludge has been done by arranging an air diffusion pipe in which plurality of diffusion holes are formed, inside an activated sludge aeration tank, and spurting a gas for air diffusion such as air inside the tank.

In such activated sludge treatment, there has been cases where the activated sludge dries and consolidates within the air diffusion pipe with the continuation of the treatment, accumulates also in the periphery of the air diffusion holes, blocks the air diffusion holes, and the air diffusion becomes unstable.

As a method for solving this problem, for example in Patent Document 1, a method of supplying a cleaning liquid to the air diffusion pipe, cleaning the inside of the air diffusion pipe, and removing the sludge is described.

In Patent Document 2, the air diffusion pipe in which an exhaust nozzle is formed in a lower portion of the air diffusion pipe, and in which a forefront is open bending downwards is described. Also described is providing a valve for releasing pressure within the air diffusion pipe to the atmospheric pressure, to an air supply piping which connects the air diffusion pipe and a blower. And, described is refluxing the sludge inside the tank from the forefront of the opening and such to inside the air diffusion pipe, by stopping the supplying of air from the blower to stop the air diffusion, and releasing the above mentioned valve to release the pressure within the air diffusion pipe to the atmospheric pressure. According to this method, it is said that since the sludge dried and accumulated near the exhaust nozzle can be damped, when the air diffusion is started for the next time, the damped sludge can be run off.

In Patent Document 3, providing an extension pipe portion which extends lower than the air diffusion pipe, providing a releasing portion on the extension pipe portion, and ejecting the sludge accumulated within the air diffusion pipe from the releasing portion is described. Also, washing away the sludge before the sludge dries and becomes enlarged, by intermittently supplying water to the air diffusion pipe is described.

PRIOR ART DOCUMENT

PATENT DOCUMENT

Patent Document 1: JP 2004-305886 A
Patent Document 2: JP 2002-307091 A
Patent Document 3: JP 3322206 B

SUMMARY OF THE INVENTION

PROBLEM TO BE SOLVED BY THE INVENTION

However, with the method described in Patent Document 1, it is necessary to install a cleaning liquid line for supplying the cleaning liquid to the air diffusion pipe, and requires equipment installing cost.

Also, with the method described in Patent Document 2, after stopping the air diffusion, since the pressure within the air diffusion pipe is lowered to the atmospheric pressure for example by releasing the valve provided on the air supply piping, large amount of the sludge within the tank not only flows within the air diffusion pipe but also flows within the air supply piping. In detail, the sludge flows within the air supply piping up to a height which corresponds to a height of a liquid level of the sludge within the tank. When the large amount of sludge also flows within the air supplying piping in this way, a large load is put on the blower when the air diffusion is started for the next time, and on top of that, large amount of sludge adheres and dries within the air supply piping, is carried to the air diffusion pipe, and a problem of blockage of the air diffusion hole also occurs.

Further, as in Patent document 3, in the method where the sludge is ejected from the releasing portion which is simply positioned lower than the air diffusion pipe, it is not easy to detach the sludge which is strongly adhered at the periphery of the air diffusion hole. Therefore, in the end, the necessity to combine the cleaning method which intermittently supplies water to the air diffusion pipe arises, and requires equipment installing cost for supplying water.

The present invention is made in view of the above matter, and its problem is to provide the operating method for the air diffusion apparatus that can prevent the drying and consolidation of the sludge to the air diffusion pipe that blocks the air diffusion hole, without putting excess load on the blower (gas supply unit) or newly installing the equipment.

MEANS FOR SOLVING THE PROBLEMS

The inventors of the present invention have found as a result of earnest consideration that the above problem can be solved by forming a plurality of air diffusion holes for spurting a gas for diffusion on an upper portion of an air diffusion unit of an air diffusion pipe and such, forming a sludge passage hole for an activated sludge to enter and exit within the air diffusion unit on an lower portion, and repeating supplying and stopping of the gas for diffusion to such air diffusion unit.
The present invention which solves the above problem has the below aspects.

(1) An operating method for an air diffusion apparatus wherein the air diffusion apparatus is provided with an air diffusion unit being disposed within an activated sludge aeration tank and spurts a gas for diffusion, and a gas supply unit for supplying the gas for diffusion to the air diffusion unit wherein: the air diffusion unit is configured to equip one or more air diffusion pipes disposed substantially horizontally; a plurality of air diffusion holes are formed on a vertical upper portion of the air diffusion pipe, and the air diffusion unit is configured to equip one or more air diffusion pipes disposed substantially horizontally; the gas for diffusion is supplied from the gas supply unit to the air diffusion unit so that a pressure head $\Delta H$ of each air diffusion pipe calculated by below formula (I) has a value 0.2 to 0.9 times an inner diameter $d_1$ of the air diffusion pipe; and a supplying step where the gas for diffusion is supplied from the gas supply unit to the air diffusion unit, and a stopping step where the supplying of the gas for diffusion is stopped without releasing the inside of the air diffusion pipe to the atmosphere are repeatedly operated.

[1]

$$\Delta H = \frac{\rho}{2g\ (\rho - \rho')}\left(\frac{v}{C}\right)^2 \cdots (\text{I})$$

$\Delta H$: water pressure head(m)
p: density of the activated sludge $(kg/m^3)$
$\rho'$: density of the gas for diffusion $(kg/m^3)$
V: spurting speed of the gas for diffusion from each air diffusion hole (m/sec)
C: flow factor shown in below formula (II)
g: acceleration of gravity $(m/s^2)$

[2]

$$C = 0.597 - 0.011m + 0.432m^2 \qquad \cdots (\text{II})$$

m is an open area ratio shown in below formula (III)

[3]

$$m = \left(\frac{A_0}{A_1}\right) = \left(\frac{d_0}{d_1}\right)^2 \qquad \cdots (\text{III})$$

$A_0$: area of each air diffusion hole $(m^2)$
$A_1$: cross-section area of the air diffusion pipe (area on a inner diameter basis of a surface vertical in a longitudinal direction) $(m^2)$
do: diameter of each air diffusion hole (m)

$d_1$: inner diameter of the air diffusion pipe (m)

(2) The operating method for the air diffusion apparatus according to (1), being characterized in that the supplying step is operated for 30 minutes to 12 hours, and the stopping step is operated for 15 to 600 seconds.

(3) The operating method for the air diffusion apparatus according to (2), being characterized in that the inner diameter $d_1$ is 10 to 100mm.

(4) The operating method for the air diffusion apparatus according to any one of (1) to (3), being characterized in that the diameter of the air diffusion hole is 1.5 to 30mm.

(5) An air diffusion apparatus provided with an air diffusion unit being disposed within an activated sludge aeration tank and spurts a gas for diffusion, and a gas supply unit for supplying the gas for diffusion to the air diffusion unit being characterized in that:

1) the air diffusion unit is configured to equip one or more air diffusion pipes disposed substantially horizontally;

2) a plurality of air diffusion holes are formed on a vertical upper portion of the air diffusion pipe, and one or more sludge passage holes are formed on a lower portion of the air diffusion pipe; and

3) the air diffusion pipe and an air-supply pipe are connected so that within a pipe at a connecting portion of the air diffusion pipe and the air-supply pipe, a pressure within the air diffusion pipe maintains a pressure which corresponds to a water pressure from the activated sludge aeration tank and the air diffusion hole even in a stopping step where the supplying of the gas for diffusion is stopped.

(6) The air diffusion apparatus according to (5), wherein a valve in provided within the pipe at the connecting portion of the air diffusion pipe and the air-supply pipe.

(7) The air diffusion apparatus according to (6), being characterized in that the valve is a three-way valve, wherein the air diffusion pipe, the air-supply pipe, and an exhaust pipe are connected to the three-way valve.

EFFECT OF THE INVENTION

According to the present invention, drying and consolidation of the sludge to the air diffusion pipe which blocks the air diffusion hole can be prevented without putting excess load on the blower (gas supply unit), or newly installing the equipment.

BRIEF DESCRIPTION OF THE DRAWINGS

FIG. 1 is a brief configuration diagram showing an example of a drainage treatment apparatus.

FIG.2A is a brief cross-sectional view along a longitudinal direction of an air diffusion pipe which the drainage treatment apparatus of FIG. 1 is equipped with.

FIG. 2B is a brief cross-section view along a longitudinal direction of the air diffusion pipe which a drainage treatment apparatus of a different configuration from FIG. 1 is equipped with.

FIG. 3 is a perspective view showing another configuration of an air diffusion unit.

FIG. 4A is a front view showing another configuration of the air diffusion unit.

FIG. 4B is a front view showing another configuration of the air diffusion unit.

FIG. 5 is a brief configuration diagram showing another example of the drainage treatment apparatus.

MODE(S) FOR CARRYING OUT THE INVENTION

Hereinafter, preferable embodiment of the present invention will be explained in detail with reference to drawings.

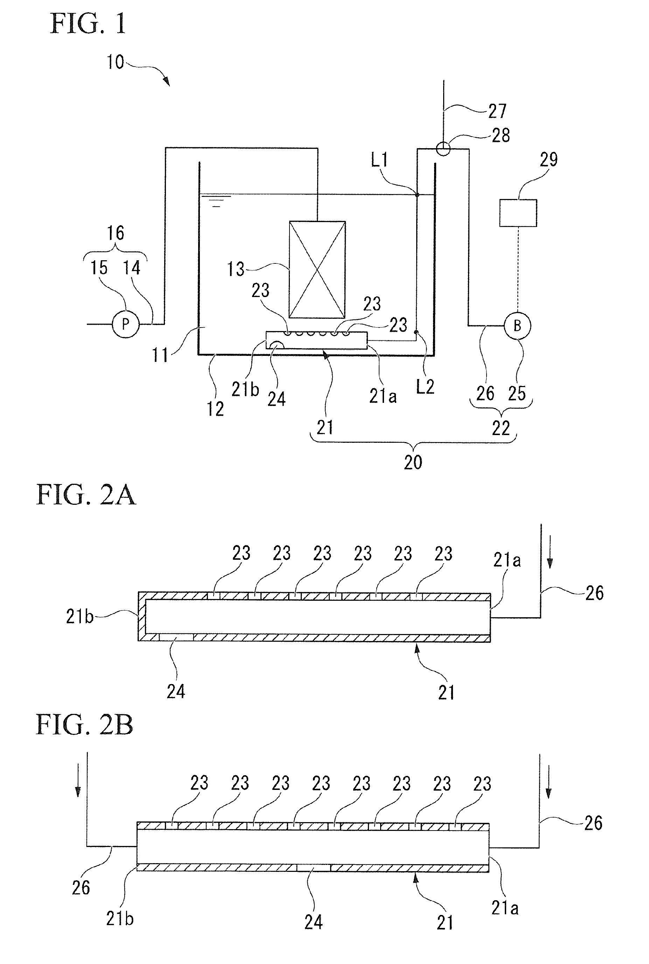

FIG. 1 is a configuration diagram briefly showing an example of a drainage treatment apparatus provided with an air diffusion apparatus preferably used in the present invention.

The drainage treatment apparatus 10 of the example is provided with an activated sludge aeration tank 12 to which an activated sludge 11 which is a water to be treated is put, a membrane separation device which is immersed within the activated sludge aeration tank 12 and is equipped with a solid-liquid separation membrane element 13, and the air diffusion apparatus 20 for spurting a gas for diffusion within the activated sludge aeration tank 12. The solid-liquid separation membrane element 13 is configured by being provided with a separation membrane such as a hollow fiber membrane in the example. Also, a suction means 16 comprised of a suction piping 14 and a suction pump 15 is connected to the solid-liquid separation membrane element 13, and is configured so that suction and filtration is possible.

The air diffusion apparatus 20 comprises one air diffusion pipe (air diffusion unit) 21 provided substantially horizontal near a bottom portion within the activated sludge aeration tank 12, and a gas supply unit 22 to supply the gas for diffusion to the air diffusion pipe 21. The air diffusion pipe is preferably installed so that an inclination in its axis direction is within 1/50, preferably within 1/100.

The air diffusion pipe 21 of the example is comprised of a circular pipe with a cross-section vertical in a longitudinal direction of a circular-shape (hereinafter, referred to as a vertical cross-section), and on its vertical upper portion, plurality of air diffusion holes 23 (6, in the example of FIG. 1) for spurting the gas for diffusion are formed in a line along a longitudinal direction. On the other hand, on a lower portion of a peripheral wall, one circular-shape sludge passage hole 24 for the activated sludge 11 to enter and exit within the air diffusion pipe 21 is formed in this example. In detail, the air diffusion hole 23 and the sludge passage hole 24 of the example are arranged so that a center of each hole is positioned at an intersection point of a vertical line (vertical line in a vertical direction) which intersects with an axis line of the air diffusion pipe 21 and the peripheral wall of the air diffusion pipe 21. That is, in the example, the air diffusion hole 23 is arranged so that the center of each air diffusion hole 23 is positioned at the intersection point of the vertical  line in the vertical upper direction which intersects with the axis line of the air diffusion pipe 21 and the peripheral wall of the air diffusion pipe 21. Also, the sludge passage hole 24 is arranged so that a center of the sludge passage hole 24 is positioned at an intersection point of the vertical line in the vertical lower direction which intersects with the axis line of the air diffusion pipe 21 and the peripheral wall of the air diffusion pipe 21. The air diffusion pipe 21 is, for example, comprised of a synthetic resin such as polycarbonate, polysulfone, polyethylene, polypropylene, acrylic resin, ABS resin, and vinyl chloride resin, or a metal and such.

Note that, the lower portion of the periphery wall is a periphery wall of a portion which is positioned on a lower side than the axis line of the air diffusion pipe 21. When the center of the sludge passage hole 24 is positioned at the lower portion of the periphery wall, the sludge passage hole 24 is formed on a lower portion of the air diffusion pipe 21.

The sludge passage hole is preferably formed so that its center is positioned within a range of 45° on the peripheral wall, from the line drawn in a vertical lower direction from the axis line of the air diffusion pipe 21, and more preferably within a range of 30°.

The air supply unit 22 is provided with a blower 25 which is an air-supply means, and an air-supply pipe 26 which connects the blower 25 and the air diffusion pipe 21. In the example, the air-supply pipe 26 is connected to one end 21a of the air diffusion pipe 21 as also shown in FIG. 2A, and supplies the gas for diffusion from the blower 25 within the air diffusion pipe 21. The sludge passage hole 24 of the air diffusion pipe 21 is formed near a closed other end 21b on an opposite side of the one end 21a of the air diffusion pipe 21 to which the air-supply pipe 26 is connected. Also, in the air-supply pipe 26 of the example, as shown in FIG. 1, an exhaust pipe 27 is formed in a branched manner to let out and eject the gas for diffusion within the air-supply pipe 26 to the atmosphere, and a three-way valve 28 is provided in the branched portion. Further, the air supply unit 22 of the example comprises a control device 29, and a performance of the blower 25 and the three-way valve 28 is automatically controlled by the control device 29.

By the above feature, the air diffusion pipe of the air diffusion apparatus of the present invention has a configuration in which the pressure within the pipe is not released to the atmosphere even when the air diffusion is stopped. For example, in FIG. 1, since the three-way valve 28 is used, when the three-way valve 28 is released so as to communicate the blower 25 and the exhaust pipe 27, the supplying can be stopped without stopping the blower, and the pressure within the pipe of the air diffusion pipe can be maintained.

In the operating method of the air diffusion apparatus of the present invention, a supplying step of supplying the gas  for diffusion from the air supply unit 22 to the air diffusion pipe 21, and a stopping step of stopping the supplying of the gas for diffusion from the air supply unit 22 are repeatedly operated.

In detail, firstly, the three-way valve 28 is operated by the control device 29, and the blower 25 and the air diffusion pipe 21 are communicated to close the exhaust pipe 27 side. Then, the blower 25 is activated, and a predetermined flow amount of the gas for diffusion is supplied to the air diffusion pipe 21 through the air-supply pipe 26 (supplying step).

Here, commonly air is used for the gas for diffusion, however, as necessary, oxygen and such can be used. Also, the flow amount of the gas for diffusion is commonly the flow amount required for the activated sludge treatment (biological treatment), however, as in the drainage treatment apparatus of the example, in the case of air diffusion with an apparatus equipped with the membrane separation device, the flow amount of the gas for diffusion can be determined by also considering the perspective of efficiently cleaning a membrane surface of the membrane separation device.

Next, after operating the supplying step where the gas for diffusion is supplied for a predetermined time, the supplying of the gas for diffusion to the air diffusion pipe 21 is stopped (stopping step). When stopping the supplying of the gas for diffusion, the blower 25 itself can be stopped, or a flow path of the air-supply pipe 26 at a lower flow side (air diffusion pipe 21 side) than the branched portion can be made to close by operating the three-way valve 28 by the controlling device 29, and communicating the blower 25 and the exhaust pipe 27. By this, in the stopping step, the supplying of the gas for diffusion to the air diffusion pipe 21 is stopped, and the inside of the air diffusion pipe 21 is not released to the atmospheric pressure, thereby the pressure within the air diffusion pipe 21 (pipe pressure) is maintained.

Next, after operating the stopping step where the supplying of the gas for diffusion is stopped for a predetermined time, the supplying step where the gas for diffusion is supplied from the air supply unit 22 to the air diffusion pipe 21 is operated once again.

In this way, according to the operating method where the air diffusion tube 21 with a plurality of air diffusion holes 23 which spurt the gas for diffusion are formed on the vertical upper portion, and on the other hand, one or more sludge passage hole 24 through which the activated sludge 11 enters and exits the air diffusion pipe 21 are formed on the lower portion is provided on the air diffusion apparatus 20, repeats the above mentioned supplying step and the stopping step, the drying and consolidation of the activated sludge 11 to the air diffusion pipe 21 which blocks the air diffusion hole 23 can be prevented without putting excess load on the blower 25, or newly installing equipment to the drainage treatment apparatus.

That is, like in the example, when the air diffusion hole 23 is provided not on the lower portion but the upper portion of the air diffusion pipe 21, when the supplying step switches to the stopping step, the gas for diffusion remaining within the air diffusion pipe 21 is ejected upward from the air diffusion hole 23 since it is of low specific gravity than the activated sludge 11. Then, since the sludge passage hole 24 is formed on the lower portion of the air diffusion pipe 21, with the ejection of the gas for diffusion, the activated sludge 11 flows within the air diffusion pipe 21 from the sludge passage hole 24. In this way, when the air diffusion hole 23 is formed on the upper portion of the air diffusion pipe 21, and the sludge passage hole 24 is formed on the lower portion, when the supplying step switches to the stopping step, the gas for diffusion within the air diffusion pipe 21 is ejected without lowering its pipe pressure by releasing the inside of the air diffusion pipe 21 to the atmospheric pressure and such, and the activated sludge 11 permeates instead. Therefore, in the stopping step, the inside of the air diffusion pipe 21 becomes in a damped state by the activated sludge 11, and can prevent the drying and consolidation of the activated sludge 11 within the air diffusion pipe 21.

Also, in the case of adopting the air diffusion pipe 21 in which the air diffusing hole 23 and the sludge passage hole 24 are formed in this way, as mentioned above, since the activated sludge 11 can flow within the air diffusion pipe 21 without lowering the pipe pressure by for example releasing the inside of the air diffusion pipe 21 to the atmospheric pressure, inconvenience due to releasing the inside of the air diffusion pipe 21 to the atmospheric pressure can be avoided.

That is, when switched to the stopping step, suppose the three-way valve 28 is operated to communicate the exhaust pipe 27 and the air-supply pipe 26 of the air diffusion pipe 21 side and lower the pipe pressure to be the atmospheric pressure, not only the inside of the air diffusion pipe 21 but also the inside of the air-supply pipe 26 becomes the atmospheric pressure. As a result, the activated sludge 11 within the activated sludge aeration tank 12 not only flows within the air diffusion pipe 21 but a large amount also flows within the air-supply pipe 26. In detail, the activated sludge 11 flows within the air-supply pipe 26 up to a position shown by reference numeral L1 in FIG.1 (height of a liquid level of the activated sludge 11 in the activated sludge aeration tank 12). When the large amount of the activated sludge 11 flows within the air-supply pipe 26 in this way, when starting the supplying of the gas for diffusion in the next supplying step, an excess load is put on the blower 25 since the blower 25 needs to push out the large amount of the activated sludge 11 from the air-supply pipe 26. Also, there is a concern that the large amount of the activated sludge 11 adheres and dries within the air-supply pipe 26, and the dried activated sludge 11 is carried to the air diffusion pipe 21 and blocks the air diffusion hole 23. While on the other hand, in the case then the pipe pressure is maintained and is allowed not to be lowered when switched to the stopping step, the activated sludge 11 only flows to a position shown by reference numeral L2 (height corresponding to a forming position of the air diffusion hole 23) even when the activated sludge 11 flows within the air-supply pipe 26. Therefore, when restarting the supplying of the gas for diffusion in the next supplying step, the activated sludge 11 which has become easy to detach within the air diffusion pipe 21 in a damp state can be ejected outside the air diffusion pipe 21 from the sludge passage hole 24 or the air diffusion hole 23 without putting a big load on the blower 25. In this way, the drying and consolidation of the activated sludge 11 to the air diffusion pipe 21 which blocks the air diffusion hole 23 can be prevented.

Here, it is preferable that a time in which the supplying of the gas for diffusion is continued, that is to say, a time for operating one supplying step is 30 minutes to 12 hours. When the time for operating one supplying step is less that 30 minutes, the activation/stopping frequency of the blower 25, and the opening and closing frequency of the three-way valve 28 becomes frequent, and a mechanical damage of the blower 25 or the three-way valve 28 accelerates. On the other hand, when the time for operating one supplying step exceeds 12 hours, a portion of the activated sludge 11 within the air diffusion pipe 21 dries, and there is a concern that the air diffusion hole 23 gets blocked over a long period of use.

Also, it is preferable that a time in which the supplying of the gas for diffusion is stopped, that is to say, a time for operating one stopping step is 15 to 600 seconds. When the time for operating one stopping step is less than 15 seconds, there is a concern that it is switched to the supplying step before the activated sludge 11 sufficiently flows within the air diffusion pipe 21. On the other hand, when the time for operating one stopping step exceeds 600 seconds, there is a concern that the amount of the gas for diffusion within the activated sludge aeration tank 12 required for the biological treatment of the activated sludge 11 becomes insufficient.

Also, like in this example, in the case of the activated sludge aeration tank 12 in which the membrane separation device is immersed, at the time of the stopping step, it is commomly necessary that the filtering treatment by the membrane separation device is also stopped. Therefore, if the time for one stopping step exceeds 600 seconds, the amount of treatment water by the membrane separation device is decreased.

Further, in each supplying step, when the predetermined flow amount of the gas for diffusion is supplied to the air diffusion unit 21, it is preferable that a spurting speed v (m/sec) of the gas for diffusion from each air diffusion hole 23, an area $A_0$ (m$^2$) of each of the air diffusion hole, a cross-section area $A_1$ (m$^2$) of the air diffusion pipe 21 (inner diameter basis area of a cross-section vertical in a longitudinal direction), an inner diameter $d_0$ (m) of each of the air diffusion hole 23, an inner diameter $d_1$ (m) of the air diffusion pipe 21, a flow amount Q (m$^3$/sec) of the gas for diffusion supplied to one air diffusion pipe 21, and a number of the air diffusing hole 23 are determined so that a water pressure head $\Delta H$ calculated by below formula (I) has a value 0.2 to 0.9 times the inner diameter $d_1$ of the air diffusion pipe 21.

The below formula (I) is commonly known as the formula used for calculation of a flow amount of an orifice.

[4]

$$\Delta H = \frac{\rho}{2g\ (\rho - \rho')}\left(\frac{v}{C}\right)^2 \quad \cdots (\text{I})$$

$\Delta H$: pressure head(m)
p: density of the activated sludge (kg/m$^3$)
$\rho'$: density of the gas for diffusion (kg/m$^3$)
V: spurting speed of the gas for diffusion from each air diffusion hole (m/sec)
C: flow factor shown in below formula (II)
g: acceleration of gravity (m/s$^2$)

[5]

$$C = 0.597 - 0.011m + 0.432m^2 \quad \cdots (\text{II})$$

m is an open area ratio shown in below formula (III)

[6]

$$m = \left(\frac{A_0}{A_1}\right) = \left(\frac{d_0}{d_1}\right)^2 \quad \cdots (\text{III})$$

$A_0$: area of each air diffusion hole (m$^2$)
$A_1$: cross-section area of the air diffusion pipe (area on a inner diameter basis of a surface vertical in a longitudinal direction) (m$^2$)
do: diameter of each air diffusion hole (m)
$d_1$: inner diameter of the air diffusion pipe (m)

Note that, the air diffusion apparatus 20 of the illustrated example is equipped with one air diffusion pipe 21, however, it can be equipped with a number of air diffusion pipes 21. In that case, it is preferable that for each of the air diffusion pipe 21, the pressure head $\Delta H$ calculated by the formula (I) has a value 0.2 to 0.9 times the inner diameter $d_1$ of the air diffusion pipe 21. Also, the flow amount Q of the gas for diffusion which is supplied to one air diffusion pipe 21 will be a value where the total flow amount diffused to the activated sludge aeration tank 12 is divided by the number of air diffusion pipe 21. The number of the air diffusion pipe 21 can be arbitrarily set depending on the shape and size of the activated sludge aeration tank 12, and in the case where provided with the membrane separation device, its shape, size and the number of the membrane separation device to be provided.

Note that, in the case where the gas for diffusion is air, a density $\rho'$ of the gas for diffusion is 1.2 (kg/m$^3$). As for a density $\rho$ of the activated sludge 11, the density is actually measured and the value is adopted.

Also, the spurting speed v (m/sec) of the gas for diffusion from each air diffusion hole 23 is a value where the flow amount Q of the gas for diffusion which is supplied to one air diffusion pipe 21 is divided by a total area of the air diffusion hole 23 formed on the air diffusion pipe 21 (area per one air diffusion hole $\times$ total number of the air diffusion holes formed on one air diffusion pipe).

Also, in this example, a circular pipe with a circular-shape vertical cross-section is used for the air diffusion pipe 21, however, there is no particular limitation to the shape of the vertical cross-section, and it can for example be an elliptical-shape, or a polygonal-shape such as a square-shape. In that case, in the formula (III), m is obtained from values of the area $A_0$ of each air diffusion hole 23 and the cross-section area $A_1$ of the air diffusion pipe 21, the water pressure head $\Delta H$ is calculated using the m, and that value is to be a value 0.2 to 0.9 times the inner diameter $d_1$.

Note that, in the formula, m is an open area ratio, and shows the ratio of the cross-section area $A_1$ of the air diffusion pipe 21 with respect to the area $A_0$ of each of the air diffusion hole 23. C is a flow factor.

In this way, when the water pressure head $\Delta H$ calculated by the above formula (I), that is to say, the force applied within the air diffusion pipe 21 is smaller than the pressure which corresponds to the inner diameter $d_1$ of the air diffusion pipe 21, and particularly, is in a value 0.2 to 0.9 times the inner diameter $d_1$, when supplying the gas for diffusion to the air diffusion pipe 21, that is to say, even in the supplying step, the activated sludge 11 flows within the air diffusion pipe 21 from the sludge passage hole 24. Therefore, not only at the time of the stopping step but also at the time of the supplying step, the activated sludge 11 constantly exists within the air diffusion pipe 21, keeps the inside of the air diffusion pipe 21 damp, and further prevents the drying and consolidation of the activated sludge 11 within the air diffusion pipe 21.

Here, in a case the water pressure head ($\Delta H$) of the above formula (I) is a value less than 0.2 times the inner diameter $d_1$, the amount of the gas for diffusion supplied to the air diffusion pipe 21 with respect to the number of the air diffusion holes 23 of the air diffusion pipe 21 and the diameter of the air diffusion hole 23 is small. Therefore, in this case, an imbalance is likely to occur in the amount of the gas for diffusion which spurts from each of the air diffusion hole 23. In detail, the closer the air diffusion hole is formed at a position close to the one end 21a of the air diffusion pipe 21 connected to the air-supply pipe 26, larger amount of the gas for diffusion spurts, and the gas for diffusion which spurts from the air diffusion hole 23 formed at a position close to the other end 21b tends to be of a small amount. On the other hand, in a case the value exceeds 0.9 times the inner diameter $d_1$, the amount of the gas for diffusion supplied within the air diffusion pipe 21 in the supplying step is large, and therefore, the amount of the activated sludge 11 which exists within the air diffusion pipe 21 in the supplying step decreases, and becomes difficult to maintain the inside of the air diffusion pipe 21 in a sufficiently damp state.

Here, the gas supply amount is set at a constant amount by the valve and such, but during the blower activation time or the valve opening-and-closing time, an instantaneous deviation from the set amount is likely to occur by necessity.

However, when the gas supply is restarted, by the occurrence of a rapid flow change within the air diffusion pipe, the cleaning effect within the air diffusion pipe becomes high.

Therefore, to give the rapid flow change within the air diffusion pipe, it is preferable that the time in which the flow amount deviating from the formula (I) is supplied to the air diffusion pipe is 10 seconds or less. More preferably, 5 seconds or less.

Also, at this time, it is preferable that the diameter (inner diameter) of each of the air diffusion hole 23 is set within the range of 1.5 to 30mm. When it is less than 1.5mm, the air diffusion hole 23 is inclined to be blocked by a foreign matter such as a residue or a solid material included in the activated sludge 11. Also, even when switched from the supplying step to the stopping step, the gas for diffusion within the air diffusion pipe 21 does not eject from the air diffusion hole 23 due to an action of a surface tension. And as a result, the flow of the activated sludge 11 from the sludge passage hole 24 too is inclined to be insufficient. On the other hand, when it exceeds 30mm, a bubble of the gas for diffusion which spurts from the air diffusion hole 23 in the supplying step becomes coarse and a dissolution efficiency of the gas for diffusion decreases, and there is a possibility that the air diffusion amount necessary for biological treatment of the activated sludge 11 becomes insufficient, or the activated sludge treatment becomes inefficient.

Note that the shape of each of the air diffusion hole 23 is not limited to a circular shape.

Each of the air diffusion hole 23 is, as in the illustrated example, preferably formed in a line so that the center of each of the hole is positioned at the intersection point of the vertical straight line which intersects with the axis line of the air diffusion pipe 21 and the periphery wall. When formed in this way, the gas for diffusion is easily spurted from each of the air diffusion hole 23 in a balanced manner.

Also, when the air diffusion hole 23 is positioned so that the center of each of the hole is positioned at the intersection point of the vertical straight line which intersects with the axis line of the air diffusion pipe 21 and the periphery wall, at the time of the stopping step where the supplying of the gas for diffusion is stopped, it becomes possible to reliably fill the inside of the pipe with the sludge which flows in from the sludge passage hole, and is more preferable.

When the air diffusion hole 23 is arranged at a position misaligned from the intersection point of the vertical straight line which intersects with the axis line of the air diffusion pipe 21 and the periphery wall, the sludge does not fill the space above the air diffusion hole within the air diffusion pipe 21 even in the stopping step where the supplying of the gas for diffusion is stopped, there is a concern that the dried sludge adheres to the inner wall of the air diffusion pipe which contacts the above space.

Also, it is preferable that each of the air diffusion hole 23 is formed at equal intervals in the longitudinal direction of the air diffusion pipe 21.

As for the sludge passage hole 24, as long as it is formed on the lower portion of the air diffusion pipe 21, there is no limitation to its number, only that one or more is formed.

It is preferable that the diameter of the sludge passage hole 24 is 3mm or more. If it is less than 3mm, the sludge passage hole 24 tends to be blocked by the foreign material such as the residue or the solid material included in the activated sludge 11.

Also, it is preferable that the sludge passage hole 24 if provided at a position farthest from the connection position of the air diffusion pipe 21 and the air-supply pipe 26. That is to say, as in the example, in the case where the air-supply pipe 26 is connected only to the one end 21a of the air diffusion pipe 21, it is preferable that the sludge passage hole 24 is formed near the end portion (other end) of the air diffusion pipe 21 on a side to which the air-supply pipe 26 is unconnected. In general, within the air diffusion pipe 21, since the pipe pressure near the connection position of the air diffusion pipe 21 and the air-supply pipe 26 becomes highest, when the sludge passage hole 24 is arranged at this portion, there is a concern that the activated sludge 11 does not enter and exit from the sludge passage hole 24 and the gas for diffusion spurts.

Also, as shown in FIG. 2B, in the case of an embodiment where the air-supply pipe 26 is connected to the both ends 21a, 21b of the air diffusion pipe 21, and the gas for diffusion is supplied within the air diffusion pipe 21 from the both ends 21a, 21b, the gas for diffusion can be spurted evenly from the air diffusion hole 23 even in the case where for example the length of the air diffusion pipe 21 is 1m or more, and is preferable. In that case, it is preferable that the sludge passage hole 24 is formed around the center portion in the longitudinal direction of the air diffusion pipe 21.

Although it is preferable that the diameter of the air diffusion hole 23 and the diameter of the sludge passage hole 24 respectively satisfy the above preferable ranges, further, when the diameter of the sludge passage hole 24 is formed larger than the diameter of the air diffusion hole 23, it is preferable for the activated sludge 11 further smoothly enters and exits at the sludge passage hole 24.

It is preferable that the inner diameter $d_1$ of the air diffusion pipe 21 is set within a range of 10 to 100mm. When the inner diameter $d_1$ is less than 10mm, the inside of the air diffusion pipe 21 tends to be blocked due to the foreign material such as the residue and the solid material which exists in the activated sludge 11. Also, when the inner diameter $d_1$ is less than 10mm, the range of the flow amount of the gas for diffusion supplied per one air diffusion pipe which becomes within the range of the formula (I) becomes small.

Also, a plurality of air diffusion pipes 21 can be arranged in a horizontal direction, and in that case, when the inner diameter $d_1$ of the air diffusion pipe 21 is 100mm or less, the air diffusion pipe 21 can be arranged closely, and as a result, the air diffusion hole 23 can also be arranged closely. In this case, the inside of the activated sludge treatment tank 12 can be more evenly diffused.

Further, when the inner diameter $d_1$ is 100mm or more, "the flow amount of the gas for diffusion supplied per one air diffusion pipe" which is necessary to satisfy the lower limit (0.2 of the inner diameter $d_1$) of the formula ( I ) becomes large.

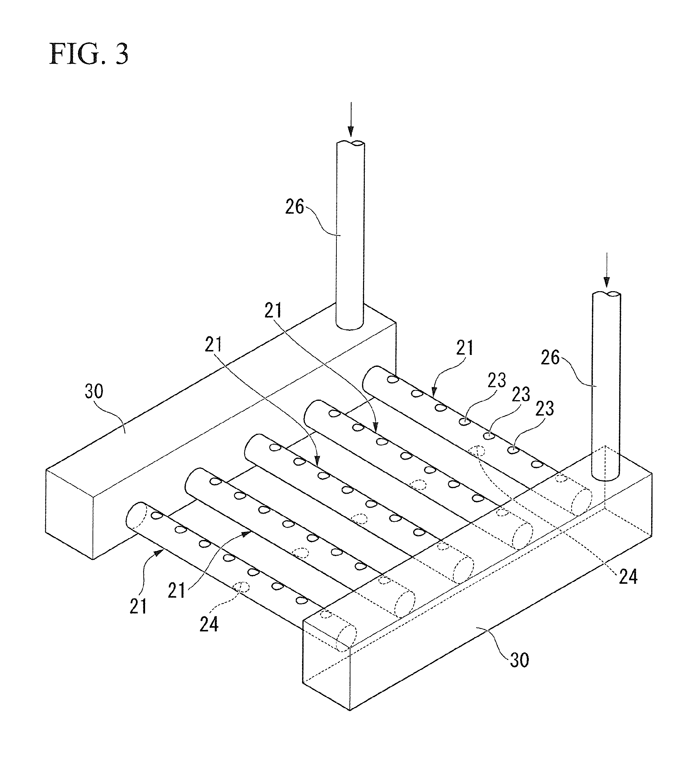

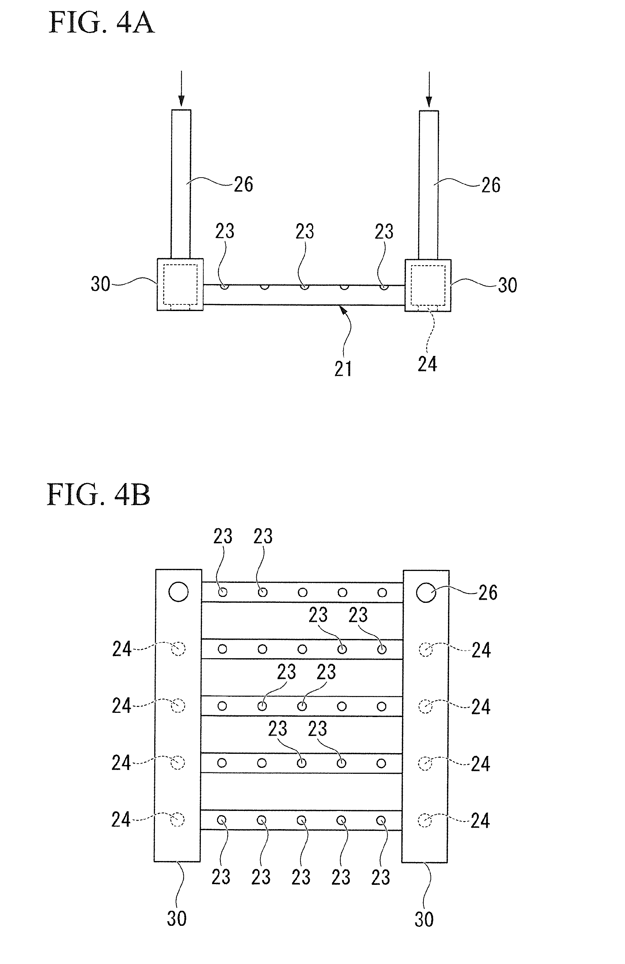

In the above description, the air diffusion pipe 21 was shown as the example of the air diffusion unit, however, as shown in FIG. 3 and FIG. 4, the air diffusion unit can be configured from the plurality of air diffusion pipes 21 arranged in parallel, and a pair of header pipes 30 connected to both ends of the plurality of the air diffusion pipes 21, and configure the air diffusion unit so that the air-supply pipe 26 is connected to each header pipe 30 respectively. In this case, the gas for diffusion is supplied to the header pipe 30 from the air-supply pipe 26, and supplied to each air diffusion pipe 21 through the header pipe 30. Also, in this case, the sludge passage hole 24 can be formed on the lower portion of each of the air diffusion pipe (FIG. 3), or can be formed on the lower portion of each of the header pipe 30 (FIG. 4).

Also, as the gas supply unit 22, in the above example, although the gas supply unit equipped by the blower 25 as the air-supply means is shown, a compressor can be used as substitute for the blower 25.

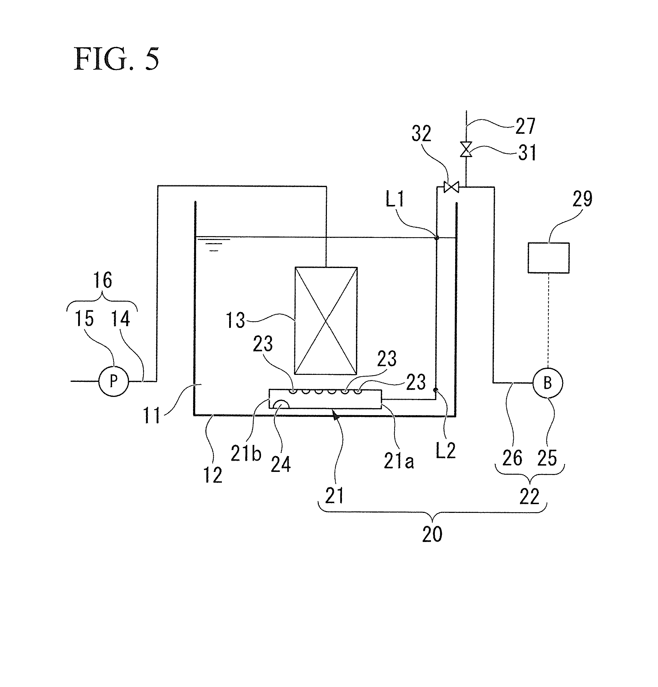

Also, in the air-supply pipe 26 of the example of FIG. 1, although the three-way valve 28 is provided at the branch portion, two opening and closing valves (two-way valve) 31,32 can be installed instead of providing the three-way valve 28, as shown in FIG. 5. In this case, in the supplying step, the two-way valve 31 provided at the exhaust pipe 27 is closed, and the two-way valve 32 provided at the air-supply pipe 26 on the lower flow side (air diffusion pipe 21 side) of the branch portion is opened. On the contrary, in the stopping step, the two-way valve 31 provided at the exhaust pipe 27 is opened, and the two-way valve 32 at the lower flow side than the branch portion is opened. By this, in the stopping step, the supplying of the gas for diffusion in the air diffusion pipe 21 is stopped, and the inside of the air diffusion pipe 21 is not released to the atmospheric pressure.

Also, in the operating method of the present invention, a plurality of air diffusion apparatus comprising the air diffusion unit and the gas supply unit for supplying the gas for diffusion to the air diffusion unit can be used. In that case, between each air diffusion unit, a timing in which the supplying step and the stopping step switches can be the same, or can be delayed with each air diffusion unit. Particularly, in the case of the activated sludge aeration apparatus where the membrane separation device is immersed, when there is no supplying of gas, the filtration treatment by the membrane separation device is usually also stopped. Therefore, when the timing in which the supplying step and the stopping step switches is delayed in each air diffusion apparatus, so either one of the air diffusion apparatus is least in the air supplying step, the air diffusion constantly takes place in the activated sludge aeration tank, and there is no need to stop the filtration treatment by the membrane separation device. Also, in this way, when the air diffusion constantly takes place, it is preferable also from the point of continuously operating the activated sludge treatment.

Note that although the above example was explained by showing the drainage treatment device 10 in which the membrane separation device provided with the solid-liquid separation membrane element 13 is immersed within the activated sludge treatment tank 12, the operation method of the present invention can also preferably be applied to the water treatment apparatus not provided with the membrane separation device.

(Example 1)

Water treatment was operated with the drainage treatment apparatus of the configuration of FIG. 1.

For the solid-liquid separation membrane element 13, a Sterapore-SADF (product name, made by Mitsubishi Rayon Engineering Co., Ltd., Polyvinylidene fluoride hollow fiber membrane) was used. For the activated sludge 11 which is the water to be treated, the activated sludge of a MLSS concentration of about 9,500mg/L was used.

For the air diffusion pipe 21, a vinyl chloride resin circular pipe of an inner diameter $d_1$ of 20mm (0. 02m) and a length of 650mm was used, and air diffusion holes 23 with a diameter of $\phi$ 5mm (0.005m) were formed with equal intervals on the vertical upper portion (on a vertical line which intersects with the axis line of the air diffusion pipe) of the air diffusion pipe 21. The inclination of the air diffusion pipe in the axis direction was within 1/100. Note that in FIG. 1, 6 air diffusion holes 23 are illustrated, but in the present Example 1, 5 were formed.

The air-supply pipe 26 is connected only to the one end 21a of the air diffusion pipe 21, and near the other end 21b of the side to which the air-supply pipe 26 is not connected, one sludge passage hole 24 of a diameter of $\phi$ 10mm was formed at the lower portion of the periphery wall. A roots blower was used for the blower 25, and the gas for diffusion was supplied to the air diffusion pipe 21 through the air-supply pipe 26 so that the flow amount Q supplied per one air diffusion pipe becomes 60L/min ($1.0\times10^{-3}$m$^3$/sec). Air was used for the gas for diffusion, and the density $\rho'$ of the gas for diffusion was set at 1.2kg/m$^3$, the density $\rho$ of the activated sludge 11 at 1,000kg/m$^3$. and the acceleration of gravity g at 9.8m/sec$^2$.

The pressure head $\Delta$H within the pipe calculated from the formula (I) using the above values became 18mm (0.018m), the value 0.9 times the inner diameter $d_1$ of the air diffusing pipe 21, and was in a preferable range in the present invention.

And in this apparatus, a water treatment experiment was done by repeatedly operating the supplying step where the gas for diffusion is supplied for 6 hours, and the stopping step where the supplying of the gas for diffusion is stopped for 180 seconds.

As a result of continuing such a water treatment experiment for 30 days, no blockage due to the activated sludge 11 was confirmed in all 13 air diffusion holes 23 of the air diffusion pipe 21.

Although there was a slight sludge adhered on the inner wall within the air diffusion pipe 21, no blockage due to the activated sludge 11 was confirmed in the sludge passage hole 24.

Also, during the 30 days of the experiment, no adhesion of the activated sludge 11 to the solid-liquid separation membrane element 13 was confirmed, and stable membrane filtration was continued.

(Example 2)

The water treatment experiment was done under all the same conditions as the Example 1, except that the diameter of the air diffusion hole 23 was set at $\phi$ 4mm (0.004m), and the air diffusion hole 23 was formed at 13 places.

The pressure head $\Delta$H within the pipe calculated from the formula (I) using the above values became 6mm (0.006m), the value 0.3 times the inner diameter $d_1$ of the air diffusing pipe 21, and was in a preferable range in the present invention.

As a result of continuing such a water treatment experiment for 30 days, no blockage due to the activated sludge 11 was confirmed in all 13 air diffusion holes 23 of the air diffusion pipe 21.

Although there was a slight sludge adhered on the inner wall within the air diffusion pipe 21, no blockage due to the activated sludge 11 was confirmed in the sludge passage hole 24.

Also, during the 30 days of the experiment, no adhesion of the activated sludge 11 to the solid-liquid separation membrane element 13 was confirmed, and stable membrane filtration was continued.

(Example 3)

The water treatment experiment was done under all the same conditions as the Example 1, except that the flow amount Q of the gas for diffusion supplied per one air diffusion pipe was set at 50L/min ($8.3 \times 10^{-4} m^3$/sec).

The pressure head $\Delta H$ within the pipe calculated from the formula (I) using the above values became 12mm (0.012m), the value 0.6 times the inner diameter $d_1$ of the air diffusing pipe 21, and was in a preferable range in the present invention.

As a result of continuing such a water treatment experiment for 30 days, no blockage due to the activated sludge 11 was confirmed in all 5 air diffusion holes 23 of the air diffusion pipe 21, and no blockage due to the activated sludge 11 was confirmed in the sludge passage hole 24. Also, during the 30 days of the experiment, no adhesion of the activated sludge 11 to the solid-liquid separation membrane element 13 was confirmed, and stable membrane filtration was continued.

(Example 4)

The water treatment experiment was done under all the same conditions as the Example 1, except that the flow amount Q of the gas for diffusion supplied per one air diffusion pipe was set at 55L/min ($9.16 \times 10^{-4} m^3$/sec).

The pressure head $\Delta H$ within the pipe calculated from the formula (I) using the above values became 15mm (0.015m), the value 0.75 times the inner diameter $d_1$ of the air diffusing pipe 21, and was in a preferable range in the present invention.

As a result of continuing such a water treatment experiment for 30 days, no blockage due to the activated sludge 11 was confirmed in all 5 air diffusion holes 23 of the air diffusion pipe 21, and no blockage due to the activated sludge 11 was confirmed in the sludge passage hole 24. Also, during the 30 days of the experiment, no adhesion of the activated sludge 11 to the solid-liquid separation membrane element 13 was confirmed, and stable membrane filtration was continued.

(Comparative example 1)

As a result of 7 days of the water treatment experiment under all the same conditions as the Example 1 except that 5 air diffusion holes 23 with a diameter of $\phi$ 5mm (0.005m) were formed at the lower side of the periphery wall of the air diffusion pipe, and the air diffusion pipe with no sludge passage hole 24 formed was used, blockage was confirmed in 3 air diffusion holes 23 out of the 5 air diffusion holes 23. Also, adhesion of the activated sludge 11 was confirmed inside the air diffusion pipe 21. Also, after the experiment, adhesion of the activated sludge 11 to the hollow fiber membrane positioned at the upper portion of the blocked air diffusion hole 23 was confirmed.

(Comparative example 2)

As a result of 10 days of the water treatment experiment under all the same conditions as the Example 1 except that the gas for diffusion was not supplied and stopped continuously, blockage was confirmed in 3 air diffusion holes 23 out of the 5 air diffusion holes 23. Also, adhesion of the activated sludge 11 was confirmed inside the air diffusion pipe 21. Also, after the experiment, adhesion of the activated sludge 11 to the hollow fiber membrane positioned at the upper portion of the blocked air diffusion hole 23 was confirmed.

(Comparative example 3)

The water treatment experiment was done under all the same conditions as the Example 1, except that the flow amount Q of the gas for diffusion supplied per one air diffusion pipe was set at 25L/min ($4.17 \times 10^{-4} m^3$/sec).

The pressure head $\Delta H$ within the pipe calculated from the formula (I) using the above values became 3mm (0.003m), the value 0.15 times the inner diameter $d_1$ of the air diffusing pipe 21, and was outside the preferable range in the present invention.

As a result of continuing such a water treatment experiment for 15 days, blockage was confirmed in 3 air diffusion holes 23 out of the 5 air diffusion holes 23 in the air diffusion pipe 21. Also, adhesion of the activated sludge 11 was confirmed inside the air diffusion pipe 21. Also, after the experiment, adhesion of the activated sludge 11 to the hollow fiber membrane positioned at the upper portion of the blocked air diffusion hole 23 was confirmed.

(Comparative example 4)

The water treatment experiment was done under all the same conditions as the Example 1, except that the flow amount Q of the gas for diffusion supplied per one air diffusion pipe was set at 70L/min ($1.17 \times 10^{-3}$m$^3$/sec).

The pressure head $\Delta H$ within the pipe calculated from the formula (I) using the above values became 24mm (0.024m), the value 1.2 times the inner diameter $d_1$ of the air diffusing pipe 21, and was outside the preferable range in the present invention.

As a result of continuing such a water treatment experiment for 15 days, blockage was confirmed in 4 air diffusion holes 23 out of the 5 air diffusion holes in the air diffusion pipe 21. Also, adhesion of the activated sludge 11 was confirmed inside the air diffusion pipe 21. Also, after the experiment, adhesion of the activated sludge 11 to the hollow fiber membrane positioned at the upper portion of the blocked air diffusion hole 23 was confirmed.

(Comparative example 5)

Water treatment was operated with the drainage treatment appratus of the configuration of FIG. 1.

For the solid-liquid separation membrane element 13, a Sterapore-SADF (product name, made by Mitsubishi Rayon Engineering Co., Ltd., Polyvinylidene fluoride hollow fiber membrane) was used. For the activated sludge 11 which is the water to be treated, the activated sludge of a MLSS concentration of about 9,500mg/L was used.

For the air diffusion pipe 21, a vinyl chloride resin circular pipe of an inner diameter $d_1$ of 8mm (0. 005m) and a length of 200mm was used, and air diffusion holes 23 with a diameter of $\phi$ 1mm (0.001m) were formed with equal intervals on the vertical upper portion (on a vertical line which intersects with the axis line of the air diffusion pipe) of the air diffusion pipe 21. The inclination of the air diffusion pipe in the axis direction was within 1/100. Note that in FIG. 1, 6 air diffusion holes 23 are illustrated, but in the present Example 1, 5 were formed.

The air-supply pipe 26 is connected only to the one end 21a of the air diffusion pipe 21, and near the other end 21b of the side to which the air-supply pipe 26 is not connected, one sludge passage hole 24 of a diameter of $\phi$ 3mm was formed at the lower portion of the periphery wall. A roots blower was used for the blower 25, and the gas for diffusion was supplied to the air diffusion pipe 21 through the air-supply pipe 26 so that the flow amount Q supplied per one air diffusion pipe becomes 2L/min ($3.3 \times 10^{-5}$m$^3$/sec). Air was used for the gas for diffusion, and the density $\rho'$ of the gas for diffusion was set at 1.2kg/m$^3$, the density $\rho$ of the activated sludge 11 at 1,000kg/m$^3$, and the acceleration of gravity g at 9.8m/sec$^2$.

The pressure head $\Delta H$ within the pipe calculated from the formula (I) using the above values became 12mm (0.012m), the value 1.5 times the inner diameter $d_1$ of the diffusing pipe 21, and was outside the preferable range in the present invention.

And in this apparatus, the water treatment experiment was done by repeatedly operating the supplying step where the gas for diffusion is supplied for 6 hours and the stopping step where the supplying of the gas for diffusion is stopped for 180 seconds.

As a result of continuing such a water treatment experiment for 7 days, blockage was confirmed in 4 air diffusion holes 23 out of the 5 air diffusion holes 23. Also, adhesion of the activated sludge 11 was confirmed inside the air diffusion pipe 21. Also, after the experiment, adhesion of the activated sludge 11 to the hollow fiber membrane positioned at the upper portion of the blocked air diffusion hole 23 was confirmed.

[Table 1]

|  | Pipe pressure/ $d_1$ | Condition of sludge blockage |
|---|---|---|
| Example 1 | 0.9 | Slight sludge adhesion on the inner wall, but OK for 30 days |
| Example 2 | 0.3 | OK for 30 days Slight sludge adhesion |
| Example 3 | 0.6 | OK for 30 days |
| Example 4 | 0.75 | OK for 30 days |
| Comparative Example 3 | 0.15 | Blockage in 3 out of 5, in 15 days |
| Comparative Example 4 | 1.2 | Blockage in 4 out of 5, in 15 days |
| Comparative Example 5 | 1.5 | Blockage in 4 out of 5, in 7 days |

INDUSTRIAL APPLICABILITY

According to the present invention, drying and consolidation of the sludge to the air diffusion pipe which blocks the air diffusion hole can be prevented without putting excess load on the blower (gas supply unit) or newly installing equipment.

DESCRIPTION OF REFERENCE NUMERALS

10: Drainage treatment apparatus
11: Activated sludge
12: Activated sludge aeration tank
13: Solid-liquid separation membrane element
14: Suction piping
15: Suction pump
16: Suction means
20: Air diffusion apparatus
21: Air diffusion pipe (air diffusion unit)
22: Air supply unit
23: Air diffusion hole
24: Sludge passage hole
25: Blower
26: Air-supply pipe
27: Exhaust pipe
28: Three-way valve
29: Control device
30: Header pipe
31, 32: Two-way valve

**Claims**

1.  An operating method for an air diffusion apparatus wherein the air diffusion apparatus is provided with an air diffusion unit being disposed within an activated sludge aeration tank and spurts a gas for diffusion, and a gas supply unit for supplying the gas for diffusion to the air diffusion unit wherein:

    the air diffusion unit is configured to equip one or more air diffusion pipes disposed substantially horizontally;
    a plurality of air diffusion holes are formed on a vertical upper portion of the air diffusion pipe, and one or more sludge passage holes are formed on a lower portion of the air diffusion pipe;
    the gas for diffusion is supplied from the gas supply unit to the air diffusion unit so that a pressure head $\Delta H$ of each air diffusion pipe calculated by below formula (I) has a value 0.2 to 0.9 times an inner diameter $d_1$ of the air diffusion pipe; and
    a supplying step where the gas for diffusion is supplied from the gas supply unit to the air diffusion unit, and a stopping step where the supplying of the gas for diffusion is stopped without releasing the inside of the air diffusion pipe to the atmosphere are repeatedly operated.

    [1]

    $$\Delta H = \frac{\rho}{2g\,(\rho - \rho\,')}\left(\frac{v}{C}\right)^2 \cdot \cdot \cdot (\mathrm{I})$$

    $\Delta H$: pressure head(m)
    $\rho$: density of activated sludge ($kg/m^3$)
    $\rho'$: density of gas for diffusion ($kg/m^3$)
    V: spurting speed of the gas for diffusion from each air diffusion hole (m/sec)
    C: flow factor shown in below formula (II)
    g: acceleration of gravity ($m/s^2$)

    [2]

$$C = 0.597 - 0.011m + 0.432m^2 \qquad \cdot \cdot \cdot (II)$$

m is an open area ratio shown in below formula (III)

[3]

$$m = \left(\frac{A_0}{A_1}\right) = \left(\frac{d_0}{d_1}\right)^2 \qquad \cdot \cdot \cdot (III)$$

$A_0$: area of each air diffusion hole ($m^2$)
$A_1$: cross-section area of air diffusion pipe (area of an inner diameter basis of a surface vertical in a longitudinal direction) ($m^2$)
do: diameter of each air diffusion hole (m)
$d_1$: inner diameter of air diffusion pipe (m)

2.  The operating method for the air diffusion apparatus according to claim 1, being **characterized in that** the supplying step is operated for 30 minutes to 12 hours, and the stopping step is operated for 15 to 600 seconds.

3.  The operating method for the air diffusion apparatus according to claim 2, being **characterized in that** the inner diameter $d_1$ is 10 to 100mm.

4.  The operating method for the air diffusion apparatus according to any one of claims 1 to 3, being **characterized in that** the diameter of the air diffusion hole is 1.5 to 30mm.

5.  An air diffusion apparatus provided with an air diffusion unit being disposed within an activated sludge aeration tank and spurts a gas for diffusion, and a gas supply unit for supplying the gas for diffusion to the air diffusion unit being **characterized in that**:

    1) the air diffusion unit is configured to equip one or more air diffusion pipes disposed substantially horizontally;
    2) a plurality of air diffusion holes are formed on a vertical upper portion of the air diffusion pipe, and one or more sludge passage holes are formed on a lower portion of the air diffusion pipe; and
    3) the air diffusion pipe and an air-supply pipe are connected so that within a pipe at a connecting portion of the air diffusion pipe and the air-supply pipe, a pressure within the air diffusion pipe maintains a pressure which corresponds to a water pressure from the activated sludge aeration tank and the air diffusion hole even in a stopping step where the supplying of the gas for diffusion is stopped.

6.  The air diffusion apparatus according to claim 5, wherein a valve in provided within the pipe at the connecting portion of the air diffusion pipe and the air-supply pipe.

7.  The air diffusion apparatus according to claim 6, being **characterized in that** the valve is a three-way valve, wherein the air diffusion pipe, the air-supply pipe, and an exhaust pipe are connected to the three-way valve.

# FIG. 1

# FIG. 2A

# FIG. 2B

FIG. 3

## FIG. 4A

## FIG. 4B

FIG. 5

**INTERNATIONAL SEARCH REPORT**

| International application No. |
| --- |
| PCT/JP2011/058414 |

A. CLASSIFICATION OF SUBJECT MATTER
*C02F3/20*(2006.01)i

According to International Patent Classification (IPC) or to both national classification and IPC

B. FIELDS SEARCHED

Minimum documentation searched (classification system followed by classification symbols)
C02F3/20

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2010-131481 A (Mitsubishi Rayon Engineering Co., Ltd.), 17 June 2010 (17.06.2010), claims 1, 5; paragraphs [0029], [0030]; fig. 2 (Family: none) | 1-7 |
| A | JP 49-52345 A (Osamu MORITA), 21 May 1974 (21.05.1974), claims; fig. 3 (Family: none) | 1-7 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
| --- | --- |
| Date of the actual completion of the international search<br>11 May, 2011 (11.05.11) | Date of mailing of the international search report<br>24 May, 2011 (24.05.11) |
| Name and mailing address of the ISA/<br>Japanese Patent Office | Authorized officer |
| Facsimile No. | Telephone No. |

Form PCT/ISA/210 (second sheet) (July 2009)

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004305886 A
- JP 2002307091 A
- JP 3322206 B